# EUROPÄISCHE PATENTSCHRIFT

(11) **EP 1 624 218 B1**
(45) Veröffentlichungstag und Bekanntmachung des Hinweises auf die Patenterteilung: **03.01.2007**
(21) Anmeldenummer: 05024175.1
(22) Anmeldetag: 07.12.1999
(51) Int. Cl.: F16D 69/04

(54) **Bremsbelag für Schienen- und schienenungebundene Fahrzeuge**
Brake pad for rail and rail-bound vehicles
Garniture de frein pour véhicules sur rails et roulant sur rails

(43) Veröffentlichungstag der Anmeldung: 08.02.2006
(62) Teilanmeldung aus: 99123979.9
(73) Patentinhaber: AlliedSignal Bremsbelag GmbH, 21509 Glinde (DE)
(72) Erfinder: Himmelsbach, Rainer, 27327 Schwarme (DE); Grimme, Hansjörg, 21509 Glinde (DE)
(74) Vertreter: Richter, Werdermann, Gerbaulet & Hofmann

(56) Entgegenhaltungen:
- EP-A- 0 254 827
- EP-A- 0 442 052
- EP-A- 0 581 988
- EP-A- 0 626 228
- DE-A- 4 138 933
- DE-U- 8 201 404

## Beschreibung

Die Erfindung betrifft einen Bremsbelag für Schienen- und schienenungebundene Fahrzeuge gemäß dem Oberbegriff des Anspruches 1.

Aus dem DE-GM 82 01 404 ist ein Reibbelag für Scheibenbremsen, insbesondere für Straßenfahrzeuge und Schienenfahrzeuge bekannt. Dieser Reibbelag ist ein- oder mehrteilig ausgebildet und besteht aus einem auf einer Trägerplatte bzw. Trägerblech befestigten Block aus einem gepressten Reibwerkstoff. Die Trägerplatte weist auf der den Reibwerkstoff tragenden Seite ein aufgesintertes Halterungsbett aus einzelnen, mit dem Reibwerkstoff kraft- und formschlüssig bildenden Formkörpern mit Hinterschneidungen, Einziehungen od. dgl. auf. Auf dem Halterungsbett ist der aufgepresste Reibwerkstoff in Blockform unter Ausfüllung der Hinterschneidungen, Einziehungen od. dgl. der einzelnen Formkörper befestigt.

Mit diesem Reibbelag soll eine kraft- und formschlüssige Verbindung zwischen dem Reibwerkstoffblock und dem Trägerblech bei gleichzeitiger Erhöhung der Temperaturbeständigkeit der Haftschicht geschaffen werden. Durch die Ausbildung der Haftschicht aus einer auf dem Trägerblech aufgesinterten Schicht aus Formkörpern soll die hohe Haftung zwischen der auf das Formkörperbett aufgepressten Reibmaterialmischung und dem Trägerblech erreicht werden. Das Aufsintern des Formkörperbettes erfolgt bei gleichmäßiger Erwärmung des Trägerbleches und damit sich das Trägerblech während des Aufsinterprozesses durch die Erhitzung nicht in seiner Struktur und in seinen Eigenschaften verändert, ist es erforderlich, Trägerbleche von größerer Stärke zu verwenden, damit keine Veränderungen der physikalischen Eigenschaften des Trägerplattenmaterials eintreten.

Hinzukommt, dass bei diesem Reibbelag keine Trägerbleche aus nichtmetallischen Materialien eingesetzt werden können.

Derartige Reibbeläge, die sich in ihrem praktischen Einsatz seit langem bewährt haben, erfordern oftmals noch die Verwendung einer Zwischenschicht zwischen dem Halterungsbett und dem Reibmaterialblock. Diese Zwischenschicht wurde bisher als Binderfolie oder als Kleber ausgebildet, sie ist jedoch mit verschiedenen Nachteilen verbunden, so dass es wünschenswert ist, eine Möglichkeit zu schaffen, dass auf diese Zwischenschicht verzichtet werden kann. Weiterhin hat es sich gezeigt, dass zwischen den bekannten Halterungsbetten und der Trägerplatte bzw. zwischen dem Halterungsbett und dem Reibwerkstoff Rissbildungen und/oder Korrosion auftreten kann, so dass eine Unterrostung des Reibmaterials kriechend von der Seite auftreten kann, die zu einer Beeinträchtigung der Bremswirkung und - im Extremfall - zu einem Ausfall des Bremsbelages führen könnte.

Das Verkleben des Reibmaterials mit dem Trägerblech erfordert bei der Bremsbelagherstellung durch die Wärmebehandlung des Klebemittels relativ lange Standzeiten, was zu einer geringeren Fertigungszahl führt. Diese Standzeiten sind erforderlich, um eine gute Verklebung des Reibmaterials mit dem Trägerblech zu erreichen. Werden die Standzeiten verkürzt, dann werden schlechte Haftverbindungen erhalten, da kein vollständiger Wärmedurchgang durch das Klebemittel erreicht wird. Hinzu kommt, dass bei der Verwendung von Klebemittel das Trägerblech vorbehandelt sein muss. Die sich durch das Aufbringen von Lackschichten ergebenden Nachteile werden gemäß der EP 0 442 052 A1 dadurch vermieden, dass vor dem Aufpressen des Reibmaterials auf die Trägerplatte auf den Rauhgrund der Trägerplatte ein galvanischer Metallüberzug aufgebracht wird. Das Zusammenwirken von Rauhgrund (Halterungsbett) und galvanischem Überzug führt dabei zu einem hohen Korrosionsschutz für die Trägerplatte, während der Rauhgrund die Haftung zwischen dem Reibmaterial und der Trägerplatte bewirkt, da der galvanische Überzug dem Konturverlauf des Rauhgrundes folgt.

Es hat sich jedoch gezeigt, dass der für die Trägerplatte bisher verwendete handelsübliche Stahl sich in Bezug auf seine Festigkeitseigenschaften nach der Rauhgrund-Behandlung derart verändert, dass sich die Festigkeit des Stahls verringert. Des weiteren hat es sich gezeigt, dass Trägerplatten für Bremsbeläge an bestimmten Stellen, bevorzugterweise in ihren Endbereichen, besonders stark und hoch beansprucht werden. Trägerplatten unter anderem auch mit hammerkopfartigen Enden oder abstützenden Endflächen sind hohen dynamischen und statischen Zug- sowie Druckbelastungen und auch Schwingungen ausgesetzt; Trägerplatten mit Hinterschneidungen in ihren Endbereichen sind stark zugbeansprucht. Diese Zonen in den Endbereichen der Trägerplatte sind sehr hohen mechanischen Spannungen ausgesetzt.

Aus der DE 41 38 933 A1 ist es ferner bekannt, nach dem Aufbringen des Rauhgrundes auf die Trägerplatte und vor dem Aufpressen des Reibwerkstoffes die Trägerplatte im Bereich hochbelasteter Zonen auf Temperaturen zwischen 800° C und 900° C bei einer Behandlungszeit von drei bis fünfzehn Sekunden zu erwärmen und anschließend auf Raumtemperatur abzukühlen.

Die Literaturstelle PATENT ABSTRACTS OF JAPAN Bd. 005, Nr. 158 (M-091), 12. Oktober 1981 (1981-10-12) -& JP 56 086244 A (SUMITOMO ELECTRIC IND LTD), 13. Juli 1981 (1981-07-13) beschreibt eine Reibbelaganordnung für eine Scheibenbremse, nach der auf der Oberfläche eines Metallbleches ein Reibbelag unter Anwendung von Wärme und Druck aufgesintert wird, wobei auf die Oberfläche des Metallbleches vor dem Aufsintern ein Drahtgeflecht durch Punktschweißen oder Löten aufgebracht wird. Um die Reibbelaganordnung zu erhalten, wird auf das so vorbereitete Metallblech der pulverförmige Reibwerkstoff zusammen mit einem Bindemittel unter Verwendung einer Form unter Anwendung von Wärme und Druck so aufgesintert, dass die pulvrige Mischung in den Raum zwischen dem Drahtgeflecht und dem Metallblech eingepresst wird. Bei dieser Reibbelagherstellung wird das Metallblech, die die Trägerplatte bildet, einer Wärmeeinwirkung ausgesetzt und zwar schon durch die Anbringung des Drahtgeflechtes, das die Funktion eines Halterungsbettes dabei hat.

Die Literaturstelle PATENT ABSTRACTS OF JAPAN Bd. 1999, Nr. 13, 30. November 1999 (1999-11-30) -& JP 11 210792 (SUMITOMO ELECTRIC IND LTD; KUSHIRO BRAKE KK), 3. August 1999 (1999-08-03) offenbart einen Scheibenbremsbelag, bei dem ein Reibwerkstoff mit einer metallischen Grundplatte vollständig verbunden ist, wobei die Grundplatte mit Halteelementen versehen ist, die aus der Plattenoberfläche herausstehen und aus einem Kopfteil und einem Schaftteil bestehen, so dass sich T-förmige Verankerungselemente für den Reibwerkstoff ergeben, die aus dem Plattenmaterial ausgeformt sind.

Ein Verfahren zur Veränderung der Oberfläche eines Werkstückes, das mit einem anderen Element verbunden werden soll, beschreibt die EP-A-0 626 228. Dieses Verfahren besteht darin, dass einzelne Stellen der Oberfläche des Werkstückes einem Energiestrahl ausgesetzt werden, wodurch an jeder strahlbeaufschlagten Stelle Material des Werkstückes durch die Einwirkung des Energiestrahles geschmolzen und dabei seitlich versetzt wird, so dass dann nach dem Erhalten des erhitzten Materials eine Vertiefung in dem Werkstück erhalten wird, die von einem Bereich aus verfestigtem Material umgeben ist, der sich wallartig aus der Oberfläche des Werkstückes erhebt und einen halsartig eingezogenen Bereich bildet. Es wird auf diese Weise eine Oberflächenstruktur geschaffen. Dieses Verfahren setzt voraus, dass das Oberflächen zu behandelnde Werkstück eine große Dicke aufweisen muss, um zur Ausbildung der Vertiefungen in der Oberfläche des Werkstückes und der Oberflächenerhebungen genügend Material zur Verfügung zu haben. Mit diesem Verfahren wird in die Struktur des Materials des Werkstückes eingegriffen, was zu einer Veränderung der physikalischen und mechanischen Eigenschaften des Werkstückes führt.

Die EP-A-0 581 988 beschreibt einen Bremsklotz und ein Verfahren zu seiner Herstellung sowie Magnetschienenbremse für Straßen- und Schienenfahrzeuge, insbesondere auch für Schienenfahrzeuge mit hohen und höheren Geschwindigkeiten. Der Bremsklotz besteht aus ein- oder mehrteilig ausgebildeten, auf einem Trägerkörper gepressten Reibwerkstoffblock, wobei mindestens ein Reibwerkstoffblock auf mehreren, nicht in einer Ebene liegenden, aneinander grenzenden Flächenstücken von Teilen des gegossenen Trägerkörpers kraft- und/oder formschlüssig umfasst wird. Der Reibwerkstoffblock ist auf einem Trägerblech befestigt, das auf der den Reibwerkstoffblock tragenden Seite oder auf beiden Seiten je ein aufgesintertes Halterungsbett aus einzelnen mit dem Reibwerkstoffblock kraft- und formschlussbildenden Formkörpern mit Hinterschneidungen, Einziehungen o. dgl. als Rauhgrund aufweist, wobei auf dem Halterungsbett der aufgepresste Reibwerkstoffblock unter Ausfüllung der Hinterschneidungen, Einziehung der einzelnen Formkörper befestigt ist.

Es ist Aufgabe der vorliegenden Erfindung, einen Bremsbelag für Schienen- und schienenungebundene Fahrzeuge zur Verfügung zu stellen, mit dem die obengenannten Nachteile beseitigt werden und auf einfache Weise einen sicheren und festen, insbesondere hochtemperaturfesten und sich nicht in seinen mechanischen und physikalischen Eigenschaften verändernden Materialverbund zwischen der Trägerplatte und dem Materialblock auch ohne zusätzliche Klebeschicht und unter Ausschluss einer schädlichen bzw. unerwünschten Wärmebehandlung des gesamten Reibmaterialblockes und der gesamten Trägerplatte ohne Veränderung der physikalischen Eigenschaften des Trägerplattenmaterials gewährleisten.

Diese Aufgabe wird durch einen Bremsbelag der o. g. Art mit den im Anspruch 1 gekennzeichneten Merkmalen gelöst.

Danach weist der erfindungsgemäße Bremsbelag eine Trägerplatte mit einem Halterungsbett für den Reibmaterialblock aus ohne Erwärmung der gesamten Trägerplatte auf diese aufgesinterten, separaten, voneinander beabstandeten Materialerhöhungen aus einem Metallpulver als Oberflächenstruktur mit separaten Pulveranhäufungen auf, wobei die Trägerplatte aus Metall, Metalllegierungen, Hartkunststoff, Glas oder Keramik besteht.

Dies hat den Vorteil, dass durch eine geringe thermische Belastung der Trägerplatte beim Herstellen des Halterungsbettes mechanische und physikalische Eigenschaften des Werkstoffes der Trägerplatte nicht negativ beeinflusst werden, wobei gleichzeitig eine verbesserter Materialverbund zwischen Trägerplatte und Materialblock erzielt wird, ohne dass hierfür eine zusätzliche Binder- oder Klebeschicht zwischen Trägerplatte und Materialblock erforderlich ist. Bei weiteren Nachbehandlungen, wie dem Anbringen des Materialblockes auf der Trägerplatte, beispielsweise mittels Aufpressen, wird die erzeugte Struktur des Halterungsbettes nicht verändert. Die Größe des Halterungsbettes kann lokal begrenzt in geeigneter Weise gewählt werden. Da nunmehr die Einschränkungen für die Trägerplatte aufgrund der bisher hohen thermischen Belastung beim Herstellen des Halterungsbettes entfallen, erweitert sich der Anwendungsbereich der Schaffung eines Bindungssystems, wie beispielsweise bei SandwichBauteilen, mittels des Halterungsbettes ganz erheblich. Durch die Struktur des Halterungsbettes wird lediglich die Oberfläche der Trägerplatte geringfügig verändert, jedoch ergeben sich keine unerwünschten Veränderungen des Werkstoffes der Trägerplatte insgesamt hinsichtlich seiner physikalischen und mechanischen Eigenschaften.

Vorzugsweise Weitergestaltungen des Bremsbelages sind in den weiteren Ansprüchen beschrieben.

Zweckmäßigerweise werden die Materialerhöhungen aus Stahl, Metall, das Karbide und / oder Nitride enthalten kann, Keramik, Glas oder einem Hartkunststoff, z. B. einem Duroplast hergestellt. Die Materialerhöhungen werden bevorzugt rasterartig auf die Trägerplatte aufgebracht.

Dadurch, dass die Materialerhöhungen mittels Aufsintern von Pulver oder mittels Pulverbeschichtung mit Laserstrahl, Flammstrahl oder Plasmastrahl, aufgebracht werden, ergibt sich die Möglichkeit, das Halterungsbettes auch auf im Raum gekrümmten, gebogenem bzw. verformte Oberflächen der Trägerplatte ohne Schwierigkeiten auszubilden. Insbesondere bei der Pulverbeschichtung mit Laserstrahl ergibt sich der Vorteil, dass wenig Wärmeenergie in die Trägerplatte eingebracht wird, so dass auch dünne bzw. dünnwandige Trägerbleche ohne Schaden durch thermische Überbelastung zu nehmen mit dem erfindungsgemäßen Halterungsbett versehen werden können. Beispielsweise werden als Pulver Metallhydride oder Karbide als Additive zu den oben benannten Materialien verwendet.

Zum Vermeiden einer hohen thermischen Belastung der gesamten Trägerplatte kann das Aufsintern des Pulvers bzgl. der Trägerplatte abschnittsweise erfolgen.

Eine zusätzliche feste Halterung des auf die Trägerplatte aufgepressten Materialblockes erzielt man dadurch, dass die Materialerhöhungen auf der Trägerplatte pilzartig ausgebildet werden. Hierbei bilden entsprechende pilzartige Köpfe der Materialerhöhungen Hinterschneidungen, welche durch Umschließung durch den Werkstoff des aufgepressten Materialblockes eine mechanische Halterung bewirken.

Zum Erzielen eines engen und festen Verbundes wird der Materialblock in die Oberflächenstruktur des Halterungsbettes eingepresst.

Beispielsweise ist ein Werkstoff für die Materialerhöhungen aus Stahl, Metall, das Karbide und / oder Nitride enthalten kann, Keramik, Glas oder einem Hartkunststoff, z. B. Duroplast.

Zweckmäßigerweise ist der Werkstoff für die Trägerplatte Metall, Hartkunststoff oder Keramik.

In vorteilhafter Weise ist zwischen dem Materialblock und dem Halterungsbett eine keramische Zwischenschicht angeordnet. Diese Zwischenschicht wirkt als Isolierschicht.

In einer bevorzugten Ausführungsform sind die Materialerhöhungen rasterartig auf die Trägerplatte angeordnet.

Nachstehend wird die Erfindung anhand der beigefügten Zeichnungen näher erläutert. Diese zeigen in
- Fig. 1-3: ein Herstellungsverfahren für einen erfindungsgemäßen Bremsbelag,
- Fig. 4: eine bevorzugte Ausführungsform einer Trägerplatte für den Bremsbelag,
- Fig. 5: einen vergrößerten senkrechten Längsschnitt durch einen Bremsbelag aus zwei über eine Metallfolie mit beidseitig ausgebildeten Oberflächenstrukturen als Halterungsbetten für verbundene Reibmaterialblöcke,

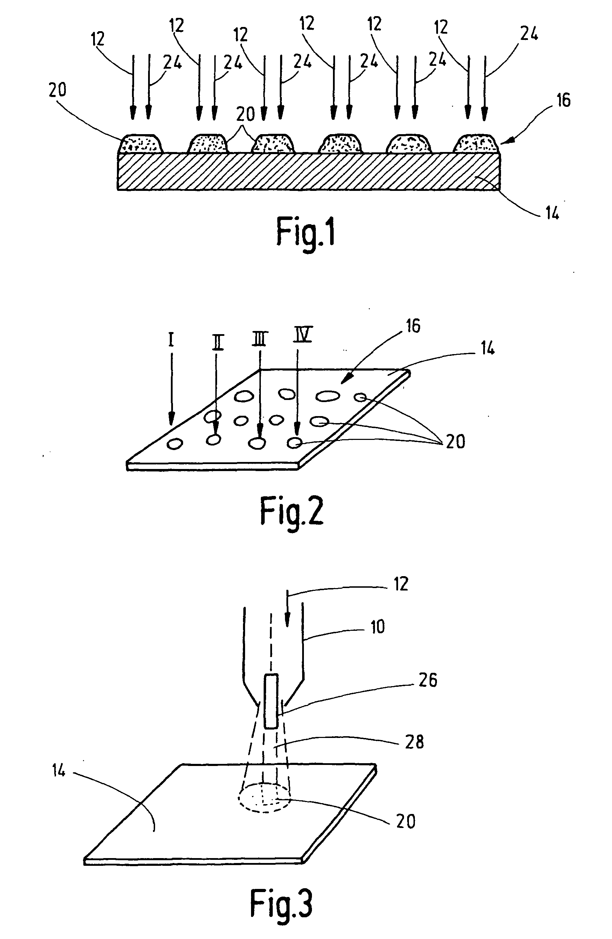

Die Trägerplatte 14 für den Bremsbelag 100 wird in der Weise hergestellt, dass mittels einer Düse 10 ein Gemisch aus einem Trägergas und einem Metallpulver 12 auf die Oberfläche der Trägerplatte 14 aufgetragen, so dass ein Halterungsbett 16 entsteht (Fig. 1). Die Düse 10 wird beispielsweise computergesteuert über der Trägerplatte 14 verfahren und trägt das Pulver 12 rasterartig als Materialerhöhungen 20 auf die Oberfläche der Trägerplatte 14 auf (Fig. 3).

In einem nachfolgenden Sinterofen wird das aufgesprühte Pulver 12 strukturiert. Hierbei wird nicht die gesamte Trägerplatte 14, sondern nur einzelne Abschnitte der Trägerplatte 14 werden nacheinander einer Temperaturbehandlung unterzogen, so dass sich keine starke thermische Belastung der gesamten Trägerplatte 14 ergibt. Ggf. wird das Auftragen des Pulvers 12 mittels der Düse 10 zusätzlich durch Einwirken eines Laser-, Flamm- oder Plasmastrahls unterstützt.

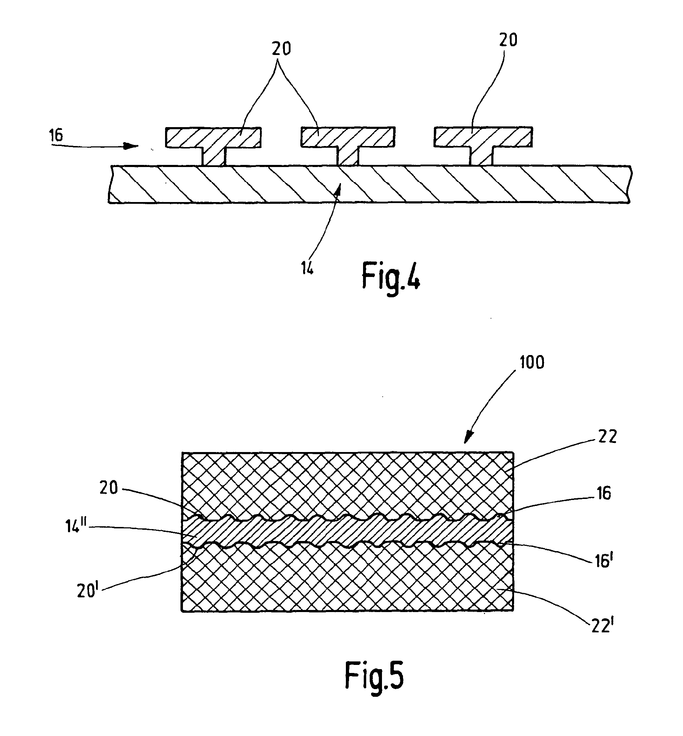

Anschließend wird ein Reibmaterialblock 22 auf das Halterungsbett 16 der Trägerplatte 14 aufgepresst und es ergibt sich der Bremsbelag 100 (Fig. 5).

Wie in Fig. 1 bis 3 veranschaulicht, wird das Pulver 12 zusammen mit einer lokal am Ort des Pulvers 12 eingebrachten Energie 24 derart aufgetragen, dass fest mit der Oberfläche der Trägerplatte 14 verbundene Materialerhöhungen 20 entstehen (Fig. 1). Die Materialerhöhungen 20 werden einzeln und nacheinander auf der Oberfläche der Trägerplatte 14 ausgebildet (Fig. 2). Mittels der eingebrachten Energie wird eine auf der Trägerplatte 14 aufgebrachte, diskrete Pulveranhäufung zu einer Oberflächenstruktur der Trägerplatte 14 mit Materialerhöhungen 20 bearbeitet.

Das Pulver wird vorzugsweise in einem Gasstrom auf die Trägerplatte 14 aufgebracht, so dass keine partielle Anhäufung gegeben ist. Die Materialerhöhungen 20 werden durch die mit dem Gasstrom mitgeführten Teilchen des Pulvers gebildet.

Das Auftragen des Pulvers 12 erfolgt beispielsweise, wie in Fig. 3 dargestellt, mittels der Düse 10 und einem Laser 26, wie beispielsweise einem Neodym-Laser, die in einer Funktionseinheit zur Laserpulverbeschichtung zusammengefasst sind und beispielsweise computergesteuert über die Trägerplatte 14 verfahren werden. An vorbestimmten Rasterstellen stoppt die Funktionseinheit, bringt Pulver 12 auf und bearbeitet dieses z. B. mittels eines Laserstrahls 28 zu einer Materialerhöhung 20. Der Laser 26 hat den besonderen Vorteil, dass gezielt und nur lokal ein Wärmeeintrag in die Trägerplatte 14 erfolgt. Dies reduziert die thermische Belastung der Trägerplatte 14 ganz erheblich und ermöglicht, dass auch bisher nicht verwendbare, thermisch empfindliche Werkstoffe als Trägerplatte mit Halterungsbett verwendet werden können.

Dieses Verfahren ist überall dort anwendbar und von Vorteil, wo auf einem Trägermaterial eine Struktur in Form eines Halterungsbettes für eine weitere mit dem Trägermaterial zu verbindende Werkstoffkomponente herzustellen ist, ohne dass dabei eine Materialveränderung des Werkstoffes des Trägermaterials erfolgt.

Durch die Strukturausbildung wird die Oberfläche der Trägerplatte 14 vergrößert. Im Bereich der Materialerhöhungen 20, welche als Verbindung zum Reibmaterialblock dienen, wird lediglich nur die Oberfläche der Trägerplatte 14 geringfügig verändert, jedoch ist eine Veränderung des Werkstoffes der Trägerplatte hinsichtlich mechanischer und physikalischer Eigenschaften wirksam vermieden. Statt des Lasers 26 ist auch eine Anwendung einer anderen Energiequelle, wie beispielsweise eines Flammstrahlers, Plasmastrahlers o. ä., möglich. Die Energiequelle muss lediglich die Eigenschaften aufweisen, Wärmeenergie punktuell bzw. in vorbestimmter Weise lokal eng begrenzt aufzubringen, bzw. zu erzeugen.

Fig. 4 veranschaulicht eine bevorzugte Ausführungsform einer Trägerplatte 14 für den Bremsbelag. Hierbei sind die Materialerhöhungen 20 pilzartig ausgebildet, so dass sich durch entsprechende Hinterschneidungen an den Materialerhöhungen eine mechanisch besonders fester Verbund zwischen Trägerplatte 14 und in Fig. 4 nicht dargestelltem Reibmaterialblock 22 ergibt.

Fig. 5 zeigt eine Ausführungsform, bei der zwei Reibmaterialblöcke 22, 22' über Halterungsbetten 16, 16' mit einer Trägerplatte 14" verbunden sind. Die aus Metall oder einem Hartkunststoff bestehende Trägerplatte 14" ist beidseitig mit Oberflächenstrukturen versehen, die durch Materialerhöhungen 20, 20' erhalten sind. Die Trägerplatte 14" ist folienartig ausgebildet und besteht aus einer Metallfolie, wobei auch eine Kunststofffolie verwendet werden kann. Auch besteht die Möglichkeit die sich gegenüberliegenden Oberflächen der beiden Reibmaterialblöcke 22, 22' mit Oberflächenstrukturen zu versehen, wobei dann auf diese Oberflächenstrukturen der beiden Reibmaterialblöcke 22, 22' je eine Kunststoffschicht, insbesondere aus einem Hartkunststoff als Trägerplatten 14', 14'a aufgebracht wird (Fig. 5). Die beiden Trägerplatten 14', 14'a werden dann miteinander verschweißt oder verklebt.

## Patentansprüche

1. Bremsbelag mit einer Trägerplatte (14) und mindestens einem an dieser befestigten Reibmaterialblock (22) für Schienen- und schienenungebundene Fahrzeuge, wobei zum Herstellen eines Verbundes zwischen der Trägerplatte (14) und dem Reibmaterialblock (22) auf der den Reibmaterialblock tragenden Seite der Trägerplatte mindestens ein Halterungsbett (16) für den Reibmaterialblock vorgesehen ist,
**dadurch gekennzeichnet,**
**dass** das Halterungsbett (16) für den Reibmaterialblock (22) aus ohne Erwärmung der gesamten Trägerplatte auf diese aufgesinterten, separaten, voneinander beabstandeten Materialerhöhungen (20) aus einem Metallpulver und die Trägerplatte (14) aus Metall, Metalllegierungen, Hartkunststoff, Glas oder Keramik besteht.

2. Bremsbelag nach Anspruch 1,
**dadurch gekennzeichnet,**
**dass** das Aufsintern des Pulvers auf die Trägerplatte (14) abschnittsweise erfolgt

3. Bremsbelag nach einem der Ansprüche 1 oder 2,
**dadurch gekennzeichnet,**
**dass** die Materialerhöhungen (20) auf der Trägerplatte (14) pilzartig ausgebildet sind.

4. Bremsbelag nach einem der Ansprüche 1 bis 3,
**dadurch gekennzeichnet,**
**dass** das Material der Materialerhöhungen (20) aus Stahl, Metall, das Karbide und/oder Nitride enthält, Keramik, Glas oder Hartkunststoffen besteht.

5. Bremsbelag nach einem der Ansprüche 1 bis 4,
**dadurch gekennzeichnet,**
**dass** der Reibmaterialblock des Bremsbelages in die Oberflächenstruktur des Halterungsbettes (16) eingepresst ist.

6. Bremsbelag nach einem der Ansprüche 1 bis 5,
**dadurch gekennzeichnet,**
**dass** vor dem Aufbringen des Reibmaterialblockes (22) auf das Halterungsbett (16) eine keramische Zwischenschicht aufgebracht ist.

7. Bremsbelag nach einem der Ansprüche 1 bis 6,
**dadurch gekennzeichnet,**
**dass** das Halterungsbett (16) auf der Trägerplatte (14) aus separaten, voneinander beabstandeten Materialerhöhungen (20) als Oberflächenstruktur auf der Trägerplatte (14) aus jeweiligen separaten Pulveranhäufungen unter lokal auf diese Pulveranhäufungen oder lokal auf Abschnitte der Trägerplatte (14) begrenzte Energiezuführung ausgebildet ist.

8. Bremsbelag nach einem der Ansprüche 1 bis 7,
**dadurch gekennzeichnet,**
**dass** zwischen dem Reibmaterialblock (22) und dem Halterungsbett (16) eine keramische, glasklare oder kristalline Zwischenschicht angeordnet ist.

9. Bremsbelag nach einem der Ansprüche 1 bis 8,
**dadurch gekennzeichnet,**
**dass** die Materialerhöhungen (20) rasterartig auf der Trägerplatte (14) angeordnet sind.

10. Bremsbelag nach einem der Ansprüche 1 bis 9,
**dadurch gekennzeichnet,**
**dass** der Bremsbelag (100) aus zwei übereinanderliegend angeordneten Reibmaterialblöcken (22, 22') besteht, die über Halterungsbetten (16, 16') aus Materialerhöhungen (20, 20') mit der Trägerplatte (14") verbunden sind, die aus Metall oder einem Hartkunststoff besteht und beidseitig mit Materialerhöhungen (20, 20') versehen sind, wobei die Trägerplatte (14") aus einer Metallfolie oder einer Kunststofffolie besteht.

## Claims

1. Brake pad with a carrier plate (14) and at least one friction material block (22) fixed thereon for rail mounted vehicles and vehicles which are not mounted on rails, whereby at least one fixing bed (16) for the material block is provided on the side of the carrier plate which carries the friction material block for producing a compound between the carrier plate (14) and the friction material block (22),
**characterized in**
**that** the fixing bed (16) for the friction material block (22) is made of separate spaced material prominences (20) made of a metal powder which are sintered on the carrier plate without heating the whole carrier plate and the carrier plate (14) is made of metal, metal alloys, hard plastics, glass or ceramics.

2. Brake pad according to claim 1,
**characterized in**
**that** the sintering of the powder onto the carrier plate (14) is made section for section.

3. Brake pad according to any of the claims 1 or 2,
**characterized in**
**that** the material prominences (20) on the carrier plate (14) are configured in the art of mushrooms.

4. Brake pad according to any of the claims 1 to 3,
**characterized in**
**that** the material of the material prominences (20) is made of steel, metal which contains carbides and/or nitrides, ceramics, glass or hard plastics.

5. Brake pad according to any of the claims 1 to 4,
**characterized in**
**that** the friction material block of the brake pad is pressed into the surface structure of the fixing bed (16).

6. Brake pad according to any of the claims 1 to 5,
**characterized in**
**that** a ceramic intermediate layer is applied onto the fixing bed (16) before applying the friction material block (22).

7. Brake pad according to any of the claims 1 to 6,
**characterized in**
**that** the fixing bed (16) is configured on the carrier plate (14) made of separate spaced material prominences (20) as surface structure on the carrier plate (14) made of respective separate powder accumulations by feeding energy locally limited to these powder accumulations or to sections of the carrier plate (14).

8. Brake pad according to any of the claims 1 to 7,
**characterized in**
**that** a ceramic, clear or crystalline intermediate layer is placed between the friction material block (22) and the fixing bed (16).

9. Brake pad according to any of the claims 1 to 8,
**characterized in**
**that** the material prominences (20) are placed in the art of a grid on the carrier plate (14).

10. Brake pad according to any of the claims 1 to 9,
**characterized in**
**that** the brake pad (100) is made of two friction material blocks (22, 22') placed superimposed which are connected by fixing beds (16, 16') made of material prominences (20, 20') with the carrier plate (14") which is made of metal or of a hard plastic material and which are provided on both sides with material prominences (20, 20'), whereby the carrier plate (14") is made of a metal foil or of a synthetic foil.

## Revendications

1. Garniture de frein avec une plaque de support (14) et au moins un bloc de matériau de friction (22) fixé à celle-ci pour des véhicules sur rails et des véhicules non montés sur rails, au moins un lit de fixation (16) pour le bloc de matériau de friction étant prévu sur le côté qui porte le bloc de matériau de friction pour produire un assemblage entre la plaque de support (14) et le bloc de matériau de friction (22),
**caractérisée en ce**
**que** le lit de fixation (16) pour le bloc de matériau de friction (22) est constitué par des bosses de matériau (20) en une poudre métallique séparées, espacées l'une de l'autre, frittées sur la plaque de support sans réchauffement de l'ensemble de la plaque de support et que la plaque de support (14) est en métal, en alliages de métal, en plastique dur, en verre ou en céramique.

2. Garniture de frein selon la revendication 1,
**caractérisée en ce**
**que** le frittage de la poudre sur la plaque de support (14) se fait section par section.

3. Garniture de frein selon l'une des revendications 1 ou 2,
**caractérisée en ce**
**que** les bosses de matériau (20) sur la plaque de support (14) sont configurées de type champignon.

4. Garniture de frein selon l'une des revendications 1 à 3,
**caractérisée en ce**
**que** le matériau des bosses de matériau (20) est en acier, métal qui contient des carbures et/ou nitrures, en céramique, en verre ou en plastiques durs.

5. Garniture de frein selon l'une des revendications 1 à 4,
**caractérisée en ce**
**que** le bloc de matériau de friction de la garniture de frein est pressé dans la structure de surface du lit de fixation (16).

6. Garniture de frein selon l'une des revendications 1 à 5,
**caractérisée en ce**
**qu'**une couche intermédiaire en céramique est appliquée sur le lit de fixation (16) avant l'application du bloc de matériau de friction (22).

7. Garniture de frein selon l'une des revendications 1 à 6,
**caractérisée en ce**
**que** le lit de fixation (16) sur la plaque de support (14) est configuré par des bosses de matériau (20) séparées, espacées l'une de l'autre, comme structure de surface sur la plaque de support (14) constituées par des accumulations de poudre respectives séparées par un apport d'énergie limité localement à ces accumulations de poudre ou localement à des sections de la plaque de support (14).

8. Garniture de frein selon l'une des revendications 1 à 7,
**caractérisée en ce**
**qu'**une couche intermédiaire céramique, transparente ou cristalline est placée entre le bloc de matériau de friction (22) et le lit de fixation (16).

9. Garniture de frein selon l'une des revendications 1 à 8,
**caractérisée en ce**
**que** les bosses de matériau (20) sont placées à la manière d'une grille sur la plaque de support (14).

10. Garniture de frein selon l'une des revendications 1 à 9,
**caractérisée en ce**
**que** la garniture de frein (100) est constituée par deux blocs de matériau de friction (22, 22') placés superposés qui sont reliés par des lits de fixation (16, 16') en bosses de matériau (20, 20') à la plaque de support (14") qui est en métal ou en plastique dur et qui est pourvue des deux côtés de bosses de matériau (20, 20'), la plaque de support (14") étant constituée par une feuille de métal ou une feuille de plastique.
